(19) Europäisches Patentamt
European Patent Office
Office européen des brevets

(11) **EP 1 095 852 B1**

(12) **FASCICULE DE BREVET EUROPEEN**

(45) Date de publication et mention
de la délivrance du brevet:
**26.11.2003   Bulletin 2003/48**

(51) Int Cl.[7]: **B64G 1/28**, B64G 1/42,
H02J 3/30, G05D 1/08

(21) Numéro de dépôt: **00402980.7**

(22) Date de dépôt: **26.10.2000**

(54) **Système de gestion d'énergie électrique et de contrôle d'attitude pour satellite**

Lage- und Leistungsregelungsystem für Satelliten

Power management and attitude control system for satellite

(84) Etats contractants désignés:
**BE DE DK NL**

(30) Priorité: **29.10.1999   FR 9913631**

(43) Date de publication de la demande:
**02.05.2001   Bulletin 2001/18**

(73) Titulaire: **Astrium SAS**
**78146 Velizy-Villacoublay (FR)**

(72) Inventeur: **Barde, Henri**
**31000 Toulouse (FR)**

(74) Mandataire: **Loisel, Bertrand et al**
**Cabinet Plasseraud,**
**84, rue d'Amsterdam**
**75440 Paris Cédex 09 (FR)**

(56) Documents cités:
**EP-A- 0 712 781**          **EP-A- 0 849 170**
**FR-A- 2 347 716**          **FR-A- 2 393 364**

- AYER FRANÇOIS ET AL: "New Opportunities for Satellite Integrated Power and Attitude Control Systems" PROCEEDINGS OF THE ANNUAL MEETING. NAVIGATIONAL TECHNOLOGY FOR THE 3RD MILLENIUM, 19 juin 1997 (1997-06-19), XP002096034
- ROBINSON W ET AL: "SPACECRAFT ENERGY STORAGE SYSTEMS" DAYTON, JULY 14 - 17, 1997,NEW YORK, IEEE,US, vol. CONF. 49, 14 juillet 1997 (1997-07-14), pages 609-616, XP000877501 ISBN: 0-7803-3726-3

## Description

L'invention concerne les systèmes de gestion d'énergie électrique et de contrôle d'attitude pour les satellites et elle trouve une application particulièrement importante, bien que non exclusive, sur les satellites placés en orbite terrestre basse, dont les passages dans l'ombre portée de la terre se répètent à fréquence élevée.

Les satellites comportent un réseau d'alimentation électrique de bord, ayant un générateur solaire et des moyens de stockage d'énergie permettant d'alimenter les charges embarquées pendant les périodes où les générateurs solaires sont dans l'ombre. Ils comportent également une centrale de contrôle d'attitude commandant plusieurs roues de réaction tournant autour d'axes différents ou plusieurs gyrodynes dont les axes de pivotement sont orientés suivant des directions différentes.

A l'heure actuelle, les moyens de stockage sont constitués par une batterie d'accumulateurs de capacité suffisante pour alimenter les charges pendant des périodes où le générateur solaire ne reçoit pas de flux ou reçoit un flux lumineux insuffisant. Les batteries d'accumulateurs ont l'inconvénient d'un poids important. De plus, il n'est pas possible de les soumettre à des décharges complètes trop nombreuses, de sorte que l'énergie stockée effectivement utilisable sur un satellite en orbite basse est relativement faible.

On connaît déjà (EP-A-0 712 871) un système de gestion d'énergie électrique et de contrôle d'attitude de satellite qui associe une paire de roues contrarotative et un condensateur de stockage, qui absorbe les transitoires rapides de la ligne de puissance. Un contrôle additionnel d'attitude est assuré par un montage permettant de dévier le moment cinétique des roues d'inertie.

On connaît aussi (FR-A-2 393 364) un système comprenant les caractéristiques du préambule de la première revendication.

La présente invention vise à fournir un système de gestion d'énergie électrique pour satellite répondant mieux que ceux antérieurement connus aux exigences de la pratique, notamment en ce qu'il permet de stocker une énergie utilisable accrue, à poids et encombrement donnés, sans pour autant dégrader le contrôle d'attitude.

Dans ce but, l'invention propose notamment un système suivant la revendication 1. Les sous-revendications définissent des caractéristiques additionnelles optionnelles. Le système peut comporter plusieurs jeux de deux roues d'inertie orientés suivant des axes différents ; il peut également comporter, en plus d'un ou de deux jeux de roues d'inertie, une roue supplémentaire orientée suivant le troisième axe d'un trièdre trirectangle.

Il existe déjà des roues utilisables, dont la vitesse maximale est de plusieurs dizaines de milliers de tours par minute.

Dans un mode avantageux de réalisation, l'équipage rotatif comprend deux roues contrarotatives alignées et entraînées sensiblement à la même vitesse, ce qui réduit le moment cinétique total de l'équipage rotatif, donc ses variations lors de l'accélération et du ralentissement des roues. Mais il n'est pas possible de garantir l'alignement des axes de rotation des deux roues avec une précision supérieure à une fraction de degré. Le défaut d'alignement inévitable se traduit par des couples parasites importants lors des phases d'accélération et de freinage, surtout lors d'un appel ou d'un apport de puissance brutal. L'effet néfaste de ce défaut d'alignement peut être pallié en augmentant les capacités de contrôle de l'attitude du satellite. Du fait de limitations physiques, ceci n'est pas toujours possible, et on peut alors avantageusement réduire la pente du transitoire de demande de puissance aux roues de stockage.

Le régulateur de décharge peut accepter cette limitation de puissance sur le générateur de la roue ou des roues, cela en faisant appel à l'énergie stockée sur le condensateur tampon, ce qui implique que ce dernier ait une capacité suffisante. Jusqu'à une période récente, la capacité de plusieurs Farads nécessaire pour répondre aux besoins sur un satellite du type couramment utilisé à l'heure actuelle pour des besoins d'observation de la terre ou de télécommunication aurait requis une masse et un volume incompatibles avec la mise en place sur un satellite. Mais il existe maintenant des composants dits "super capacités" ou "super condensateurs" permettant d'arriver aux capacités nécessaires avec un volume et un poids acceptables.

Le terme "condensateur" utilisé ici doit être interprété comme pouvant désigner soit un condensateur unique, soit (ce qui sera le cas habituel) une batterie de plusieurs condensateurs montés en parallèle et/ou en série.

Dans la pratique, un équipage à une seule roue exigerait que cette roue tourne à très grande vitesse pour permettre une compensation de couples perturbateurs.

La constitution qui vient d'être définie permet non seulement de réduire la masse des moyens de stockage d'énergie, mais aussi d'espérer une durée de vie beaucoup plus importante que celle des batteries d'accumulateurs électrochimiques, au moins lorsque ces batteries sont fréquemment sollicitées pour se substituer aux générateurs solaires.

Les caractéristiques ci-dessus ainsi que d'autres apparaîtront mieux à la lecture de la description qui suit d'un mode particulier de réalisation, donné à titre d'exemple non limitatif. La description se réfère aux dessins qui l'accompagnent, dans lesquels :

- la figure 1 est un synoptique simplifié des composants d'un système destinés à la commande des roues de stockage en supposant un alignement parfait de leurs axes de rotation (état antérieur de la technique) ;

- la figure 2 est un schéma montrant une répartition possible des roues d'un système ;
- la figure 3 est un synoptique simplifié des composants du système destinés à la commande des roues en prenant en compte le défaut d'alignement entre leurs axes de rotation.

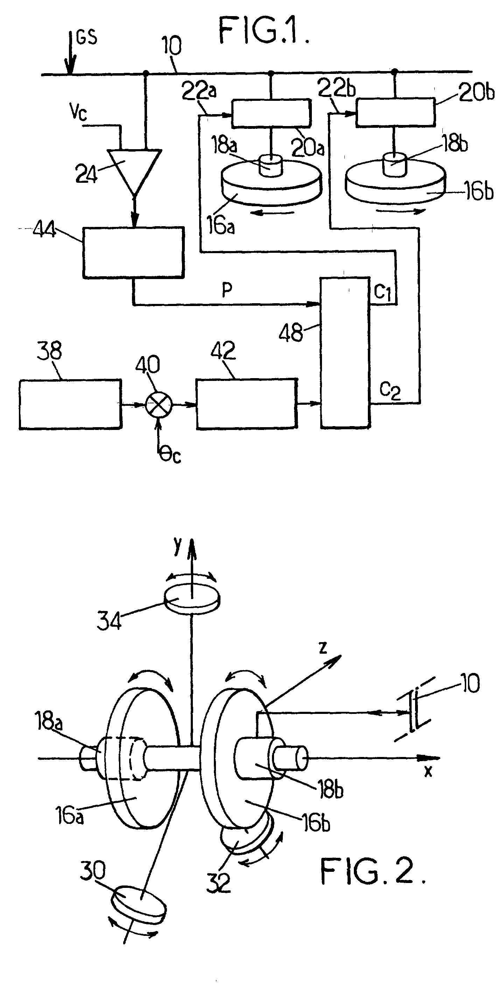

La partie du système intégré destinée à la gestion de l'énergie électrique est schématisée en figure 1. Les charges embarquées (non représentées), les générateurs solaires GS et les moyens de stockage d'énergie électrique, sont reliés à une ligne d'alimentation 10.

Les moyens de stockage cinétique comprennent un couple de roues contrarotatives 16a et 16b, chacune couplée à un moteur-générateur 18a et 18b. Chaque moteur-générateur 18a (respectivement 18b) est relié à la ligne d'alimentation 10 par un régulateur 20a (respectivement 20b), dont la fonction sera décrite plus loin. En général, le moteur-générateur sera du type à courant continu et à commutation électronique commandé par une entrée 22a (respectivement 22b).

Les roues 16a et 16b sont utilisées à la fois pour le stockage d'énergie et la commande d'attitude autour de l'axe de tangage x.

Pour cela, le système comprend un capteur 38 qui fournit l'angle courant de pointage en roulis à un comparateur 40 qui reçoit aussi la consigne d'attitude $\theta_c$. Le signal d'erreur attaque un réseau correcteur 42 qui transforme le signal d'erreur angulaire en une consigne de couple C.

La puissance P appelée lorsque le générateur solaire devient inopérant peut être évaluée par comparaison entre une tension de consigne Vc et la tension sur la ligne 10. Le signal d'écart fourni par un comparateur 24 est appliqué à un générateur 44 de consigne de puissance totale P. Cette puissance totale est à fournir à partir des roues de stockage 16a et 16b.

Pour respecter simultanément la consigne de puissance P et la consigne d'attitude, on doit tirer des roues 16a et 16b des couples respectifs C1 et C2 reliés à la puissance P par la relation :

$$P = K1.C1.\Omega1 + K2.C2.\Omega2.$$

$\Omega1$ et $\Omega2$ désignent les vitesses et K désigne, pour chaque roue, un facteur caractéristique de l'équipage rotatif, prenant en compte le moment d'inertie de l'équipage rotatif et le rendement électrique des moteurs-générateurs 18a et 18b.

A partir de C et de P, un mélangeur 48 élabore des valeurs de consigne C1 et C2, telles que C1-C2 = C. Elles sont converties en consignes de puissance, donc de courant, qui sont envoyées aux électroniques de commande des moteurs générateurs des équipages rotatifs.

Dans la réalité, l'alignement des roues n'est obtenu qu'à une fraction de degré près et ce défaut d'alignement se traduit par un couple perturbateur supplémentaire sur les axes transverses.. Ce couple conduit à une erreur de pointage qu'on ne peut réduire suffisamment que :

- en augmentant les capacités du contrôle d'attitude (augmentation de la bande passante, contrôle intégral, compensation en boucle ouverte...) et/ou
- en diminuant les transitoires de couple, donc les variations du profil de puissance.

La figure 2 montre une implantation possible des roues de stockage 16a et 16b et des roues de réaction nécessaires pour contrôler les axes autres que celui des roues de stockage. Ces roues de réaction peuvent être réparties de façon que leurs axes aient des orientations différentes et soient tous dans un plan orthogonal à l'axe des roues de stockage d'énergie 16a et 16b. On peut notamment utiliser un jeu de trois roues de réaction 30, 32 et 34 réversibles dont les axes sont répartis à 120° les uns des autres. L'axe commun des roues de stockage est par exemple orienté dans la direction x (axe de tangage), tandis que les axes des roues de réaction 30, 32 et 34 sont dans le plan yz (plan roulis-lacet).

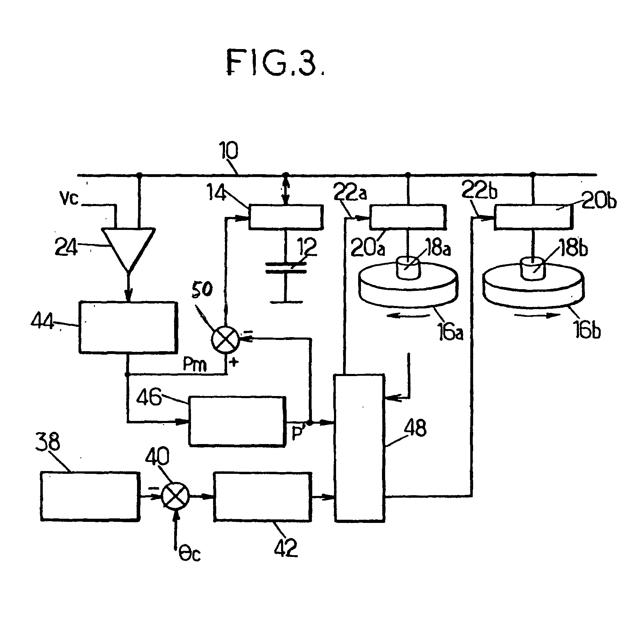

La figure 3 représente une réalisation possible de l'invention prenant en compte le défaut d'alignement des roues contrarotatives d'une même paire.

Le principe de commande autour de l'axe commun des roues de stockage, par exemple le tangage, est identique à celui décrit dans le cas de roues parfaitement alignées. Par contre, afin de ne pas demander des valeurs de couple excessives aux roues de réaction situées sur les axes transverses et de réduire le transitoire de couple dû au défaut d'alignement, on limite la pente du transitoire de puissance demandée aux roues de stockage. Ceci est réalisé par le filtre 46.

Dans ces conditions la barre d'alimentation 10 ne reçoit pas la puissance demandée, et il est donc nécessaire qu'un dispositif de stockage d'énergie annexe en assure la fourniture complémentaire. Il s'agit du supercondensateur 12 relié à la ligne 10 par un régulateur de charge et de décharge 14.

L'appel de puissance se présente approximativement sous forme d'un échelon Pm, notamment au début d'une éclipse. Le filtre 46 peut par exemple fixer une pente constante p de durée $\Delta t$ telle que Pm = p. $\Delta t$. La valeur choisie pour $\Delta t$ constitue un compromis entre une durée longue, favorable à la précision du pointage, et une durée courte, réduisant les exigences de stockage sur le condensateur. Dans ce cas, il faut relever que la limitation du taux de variation porte sur la puissance et non pas sur le couple, de sorte que la pente de variation de ce dernier n'est pas la même au début et à la fin d'une éclipse.

Une variante consiste à adopter une loi de limitation de la pente de variation du couple, par exemple un filtre passe-bas du premier ordre.

Dans tous les cas, la sortie du filtre 46 est une consigne de puissance P', différente de Pm tant que le régime permanent n'est pas atteint.

La puissance résiduelle Pm-P', calculée par un soustracteur 50, est appliquée à l'électronique 14 de commande du courant de charge et de décharge du condensateur, qui fournit l'énergie supplémentaire requise.

L'équipage rotatif constitué de la roue 16a (respectivement 16b) et du moteur-générateur 18a (respectivement 18b) présente une force électro-motrice sensiblement proportionnelle à la vitesse et donc à la racine carrée de l'énergie stockée. Son évolution est comparable à l'évolution de la tension aux bornes du condensateur en fonction de l'énergie stockée. Il sera souvent possible de regrouper les régulateurs 14, 20a et 20b, du moins en ce qui concerne la répartition de la puissance demandée entre les roues 16a et 16b et le condensateur 12. En cas de réduction brutale de la consommation, qui se traduit par une augmentation de la tension de la ligne d'alimentation 10, le module 48 n'envoie au régulateur 20 qu'une consigne de courant inférieure à celle qui permettrait d'absorber l'excédent de puissance. Cet excédent est absorbé par le super condensateur 12.

## Revendications

**1.** Système de gestion d'énergie électrique et de contrôle d'attitude d'un satellite, comprenant un module de contrôle d'attitude commandant plusieurs roues de réaction (30-34) orientées autour d'axes différents et comprenant un réseau d'alimentation électrique de bord ayant une source primaire de puissance (GS) reliée à une ligne de puissance et des moyens de stockage connectables à cette ligne, lesdits moyens de stockage comprenant un équipage rotatif ayant deux roues d'inertie contrarotatives (16a-16b) alignées et entraînées sensiblement à la même vitesse, munies chacune d'un moteur-générateur (18a-18b), **caractérisé en ce que** lesdits moyens de stockage comprennent aussi un condensateur tampon (12), relié à la ligne de puissance par l'intermédiaire d'un régulateur (14), les échanges d'énergie entre les moyens de stockage d'énergie et la ligne d'alimentation de puissance étant commandés et répartis par un régulateur répartiteur de la puissance appelée entre l'équipage rotatif et le condensateur tampon (12) de façon à réduire les transitoires d'appel de puissance à partir de l'équipage rotatif et en conséquence les couples de compensation requis des roues de réaction.

**2.** Système selon la revendication 1, **caractérisé en ce que** le régulateur- répartiteur comprend un filtre (46) de limitation de la variation de puissance appelée à partir des roues d'inertie ou de variation du couple de fourniture de la puissance appelé à partir des roues d'inertie.

**3.** Système selon la revendication 1, **caractérisé en ce que** le régulateur- répartiteur a un circuit de régulation commandant la différence entre les couples demandés aux deux roues d'inertie en réponse à un signal d'erreur d'attitude autour de l'axe des roues d'inertie

**4.** Système selon la revendication 1, **caractérisé en ce que** le régulateur-répartiteur comprend :

- un générateur (44) de consigne de puissance appelée en réponse à un écart entre une tension de consigne et la tension sur la ligne de puissance,
- un filtre (46) de limitation de la variation de puissance appelé à partir des roues d'inertie contrarotatives,
- des moyens de fourniture d'une consigne de couple à fournir par l'équipage rotatif autour de la direction d'alignement des roues d'inertie en réponse à une erreur d'orientation du satellite autour de la direction d'alignement,
- un mélangeur (48) d'élaboration de valeur de consigne de puissance destiné à des électroniques de commande des moteurs-générateurs (18a-18b) des roues d'inertie, ledit mélangeur répartissant les puissances demandées aux ou fournies par les moteurs-générateurs dans la limite d'une consigne de puissance fournie par le filtre (46), et
- un soustracteur (50) déterminant la puissance résiduelle à appliquer à une électronique (14) de commande du courant de charge ou de décharge du condensateur pour provoquer la fourniture ou l'absorption de la différence entre les puissances appliquées à l'entrée et à la sortie du filtre.

## Patentansprüche

**1.** System zur Verwaltung der elektrischen Energie und zur Steuerung der Raumlage eines Satelliten, mit einer Einheit zur Steuerung der Raumlage, welche mehrere Reaktionsräder (30 bis 34) ansteuert, die um unterschiedliche Achsen herum ausgerichtet sind, und mit einem elektrischen Bordnetz, das eine primäre Leitungsquelle (GS) aufweist, die mit einer Leistungsleitung und mit an diese Leitung anschließbaren Speichermitteln verbunden ist, wobei die Speichermittel ein Drehorgan mit zwei gegeneinander drehenden, zueinander ausgerichteten und im wesentlichen mit der gleichen Geschwindigkeit angetriebenen Schwungrädern (16a bis 16b), die jeweils mit einem Motorgenerator (18a bis 18b) versehen sind, aufweisen,
**dadurch gekennzeichnet,**
**daß** die Speichermittel auch einen Pufferkondensator (12) umfassen, der mittels eines Reglers (14) mit der Leistungsleitung verbunden ist, wobei der Energieaustausch zwischen den Energiespeichermitteln und der Leistungsversorgungsleitung durch einen Verteilungsregler der zwischen dem Drehorgan und dem Pufferkondensator (12) abgerufenen Leistung gesteuert und verteilt wird, derart, daß die Momentan-Leistungsabrufe vom Drehorgan und folglich die Kompensationsmomente, welche die Reaktionsräder benötigen, verringert werden.

2. System nach Anspruch 1,
**dadurch gekennzeichnet,**
**daß** der Verteilungsregler ein Filter (46) zur Begrenzung der Variation der von den Schwungrädern abgerufenen Leistung oder der Variation des Liefermoments der von den Schwungrädern abgerufenen Leistung umfaßt.

3. System nach Anspruch 1,
**dadurch gekennzeichnet,**
**daß** der Verteilungsregler einen Regelschaltkreis hat, welcher in Antwort auf ein Fehlersignal zur Raumlage um die Achse der Schwungräder herum die Differenz zwischen den angeforderten Drehmomenten regelt.

4. System nach Anspruch 1,
**dadurch gekennzeichnet,**
**daß** der Verteilungsregler umfaßt :

   - einen Generator (44) für die in Antwort auf eine Abweichung zwischen einer Sollspannung und der Spannung auf der Leistungsleitung abgerufene Sollleistung,
   - ein Filter (46) zur Begrenzung der Variation der von den gegeneinander drehenden Schwungrädern aus abgerufenen Leistung,
   - Mittel zur Lieferung eines Drehmoment-Einstellwertes, der durch das um die Ausrichtungsrichtung der Schwungräder herum drehende Organ in Antwort auf eine Fehllage des Satelliten zur Ausrichtungsrichtung geliefert werden soll,
   - eine Mischeinrichtung (48) zur Verarbeitung des Leistungs-Sollwertes, der für die Steuerelektroniken der Motorgeneratoren (18a bis 18b) der Schwungräder bestimmt ist, wobei die Mischeinrichtung die von den Motorgeneratoren angeforderten oder durch diese gelieferten Leistungen in den Grenzen eine durch das Filter (46) gelieferten Sollleistung verteilt, und
   - ein Subtraktionsglied (50), welches die Reistleistung bestimmet, die an eine Elektronik (14) zur Steuerung des Lade- oder Entladestromes des Kondensators abzugeben ist, um die Lieferung oder die Aufnahme der Differenz zwischen den abgegebenen Leistungen am Eingang und am Ausgang des Filters einzuleiten.

**Claims**

1. A system for managing electrical energy and for controlling attitude of a satellite, comprising an attitude control module controlling a plurality of reaction wheels (30-34) oriented about mutually different axes and comprising an on-board electricity power supply network having a primary power source (GS) connected to a power line and storage means connectable to this line, said storage means comprising a rotary unit having two mutually aligned counter-rotating inertia wheels (16a-16b) driven at substantially the same speed and each with a respective motor-generator (18a-18b),
**characterized in that** said storage means also comprises a buffer capacitor (12), connected to the power line by means of a regulator (14), the power interchanges between the energy storage means and the power supply line being controlled and distributed by a regulator-distributor distributing the power demand between the rotary unit and the buffer capacitor (12) so as to attenuate the power demand transients from the rotary unit and, consequently, the compensating torques required from the reaction wheels.

2. System according to claim 1, **characterized in that** said regulator-distributor comprises a filter (46) for limiting the rate of variation of power called from the inertia wheels or of variation of the torque for providing the power called from the inertia wheels.

3. System according to claim 1, **characterized in that** the regulator-distributor has a regulation circuit controlling the difference between the torques required from the two inertia wheels, responsive to an attitude error signal about the axis of the inertia wheels.

4. System according to claim 1, **characterized in that** the regulator-distributor comprises:

   - a generator (44) for generating a reference of power called in response to an error between a reference voltage and the voltage in the power line,
   - a filter (46) for limiting the rate of variation of power called from the counter-rotating inertia wheels,
   - means for providing a reference of the torque to be provided by the rotary unit around the direction of alignment of the inertia wheels in response to an error of orientation of the satellite about the direction of alignment,

- a mixer (48) for generating power reference values for electronics controlling the motors-generators (18a-18b) of the inertia wheels, said mixer distributing the powers called from or provided by the motors-generators within the limit of a power reference provided by the filter (46), and

- a subtracter (50) determining the residual power to be applied to electronics (14) for controlling the charging or discharging current applied to or from the capacitor to provoke the delivery or absorption of the difference between the powers applied to the inlet and outlet of the filter.

# FIG.1.

# FIG.2.

# FIG.3.